# EUROPÄISCHE PATENTSCHRIFT

(11) **EP 3 782 081 B1**
(45) Veröffentlichungstag und Bekanntmachung des Hinweises auf die Patenterteilung: **07.12.2022**
(21) Anmeldenummer: 19727883.1
(22) Anmeldetag: 17.05.2019
(51) Int. Cl.: G06N 3/04, G06N 3/08

(54) **VERFAHREN ZUR ERZEUGUNG EINES TESTDATENSATZES, VERFAHREN ZUM TESTEN, VERFAHREN ZUM BETREIBEN EINES SYSTEMS, VORRICHTUNG, STEUERUNGSSYSTEM, COMPUTERPROGRAMMPRODUKT, COMPUTERLESBARES MEDIUM, ERZEUGUNG UND VERWENDUNG**
METHOD FOR GENERATING A TEST DATA SET, METHOD FOR TESTING, METHOD FOR OPERATING A SYSTEM, DEVICE, CONTROL SYSTEM, COMPUTER PROGRAM PRODUCT, COMPUTER READABLE MEDIUM, GENERATION AND USE
PROCÉDÉ DE GÉNÉRATION D'UN ENSEMBLE DE DONNÉES D'ESSAI, PROCÉDÉ D'ESSAI, PROCÉDÉ DE FONCTIONNEMENT D'UN SYSTÈME, DISPOSITIF, SYSTÈME DE COMMANDE, PRODUIT PROGRAMME D'ORDINATEUR, SUPPORT LISIBLE PAR ORDINATEUR, PRODUCTION ET UTILISATION

(30) Priorität: 20.06.2018 EP 18178772
(43) Veröffentlichungstag der Anmeldung: 24.02.2021
(73) Patentinhaber: Siemens Industry Software NV, 3001 Leuven (BE)
(72) Erfinder: BOTERO HALBLAUB, Andrés, 85614 Kirchseeon (DE); GÖTZ, Jan, 91054 Buckenhof (DE)
(74) Vertreter: Maier, Daniel Oliver
(86) Internationale Anmeldenummer: PCT/EP2019/062774
(87) Internationale Veröffentlichungsnummer: WO 2019/242955

(56) Entgegenhaltungen:
- TIAN YUCHI ET AL: "DeepTest: Automated Testing of Deep-Neural-Network-Driven Autonomous Cars", 2018 IEEE/ACM 40TH INTERNATIONAL CONFERENCE ON SOFTWARE ENGINEERING (ICSE), ACM, 27. Mai 2018 (2018-05-27), Seiten 303-314, XP033397196,
- Ming-Yu Liu ET AL: "Unsupervised Image-to-Image Translation Networks", , 15. Februar 2018 (2018-02-15), Seiten 1-11, XP055536098, arXiv.org Gefunden im Internet: URL:https://arxiv.org/abs/1703.00848v5 [gefunden am 2018-12-18]

## Beschreibung

Die Erfindung betrifft ein Verfahren zur Erzeugung eines Testdatensatzes für einen Algorithmus, sowie ein Verfahren zum Testen eines solchen. Darüber hinaus betrifft die Erfindung ein Verfahren zum Betreiben eines Systems zur automatisierten, bildabhängigen Steuerung einer Einrichtung und eine Vorrichtung zur Durchführung der vorgenannten Verfahren. Schließlich betrifft die Erfindung eine Vorrichtung, ein Computerprogrammprodukt, und ein computerlesbares Medium.

Im Bereich der Entwicklung von Steuerungssoftware stellt das Testen von Software einen beachtlichen Teil des Entwicklungsaufwandes dar. Dies ist u.a. dem Umstand geschuldet, dass das Design von Qualitätstests komplex und die Fehlerdetektion schwierig und nicht trivial ist. Insbesondere gilt, dass je komplexer ein zu testender Algorithmus ist, umso komplexer auch die Tests für diesen sind. Vor allem ist es auch schwer "umfassend" zu testen, also eine geforderte Testabdeckung zu erreichen.

Algorithmen zur Bildverarbeitung gehören mit zu den komplexesten Algorithmen in Computersystemen. Der Anmelderin ist bekannt, dass beispielsweise Algorithmen, die im Bereich der fortgeschrittenen Fahrerassistenz (engl. Advanced Driver Assistance, ADAS) oder der autonomen Fahrzeugführung zum Einsatz kommen, einer menschlichen Überprüfung mittels Testszenarien, die auf aufgezeichneten Testdatensätzen beruhen, unterzogen werden, oder "Real-Life-Tests" auf Testgeländen oder in der realen Umgebung stattfinden.

Eine Überprüfung kann gegen vordefinierte "Best-Case-Actions" in realen Videosequenzen stattfinden, die zuvor aufgezeichnet und mit einem hohen Maß an menschlichen Interventionen erzeugt wurden. Jeder neue Testfall wird manuell erzeugt und lässt keinen Raum für Zufälligkeit im Testszenario.

Die bekannten Ansätze haben gemeinsam, dass sich sowohl die Testdaten als auch ein erwartetes Verhalten durch eine enge Interaktion mit einem menschlichen Akteur auszeichnen und mit einer schwierigen Integration in einen automatisierten Test-Setup einhergehen. Eine Erweiterung der Tests stellt sich komplex und schwierig dar.

Der Anmelderin ist weiterhin bekannt, dass bei einigen Herstellern die Testphase sogar auf einen sich an die Auslieferung des Produktes anschließenden Zeitraum ausgedehnt wird und während überwachter autonomer Fahrvorgänge Testdaten gesammelt werden, um die Algorithmen basierend auf diesen zu verbessern.

Aus der Veröffentlichung TIAN YUCHI ET AL: "DeepTest: Automated Testing of Deep-Neural-Network-Driven Autonomous Cars", 2018 IEEE/ACM 40TH INTERNATIONAL CONFERENCE ON SOFTWARE ENGINEERING (ICSE), ACM, 27. Mai 2018 (2018-05-27), Seiten 303-314, ist ein systematisches Testwerkzeug zur automatischen Erkennung fehlerhafter Verhaltensweisen von DNN-getriebenen Fahrzeugen bekannt geworden. Das Testwerkzeug untersucht systematisch verschiedene Teile der DNN-Logik, indem es Testeingaben generiert, die die Anzahl der aktivierten Neuronen, bspw. in Bezug auf Lenkwinkel und Lenkrichtung, maximiert.

Aus der Veröffentlichung Ming-Yu Liu ET AL: "Unsupervised lmage-to-lmage Translation Networks", 15. Februar 2018 (2018-02-15), Seiten 1-11, https://arxiv.org/abs/1703.00848v5, wird ein allgemeines Modell für die unbeaufsichtigte Bild-zu-Bild-Übersetzung vorgestellt. Darin wird das allgemeine Modell bspw. auf mehrere unbeaufsichtigte Straßenszenenbilder angewendet und eine Übersetzung von sonnig zu regnerisch, Tag zu Nacht, sommerlich zu verschneit und umgekehrt angewendet.

Ausgehend hiervon ist es eine Aufgabe der vorliegenden Erfindung, verbesserte Möglichkeiten zum Testen von komplexen, bildverarbeitenden Algorithmen bereitzustellen.

Diese Aufgabe wird gelöst durch ein Verfahren nach Anspruch 1.

Die vorliegende Erfindung basiert auf der Überlegung, eine künstliche Intelligenz einzusetzen, um aus einem initialen Datensatz Bilddaten und/oder Sensordaten und zugehörige Handlungsbereiche zu generieren, mit denen Algorithmen insbesondere aus dem Bereich der Bild-, insbesondere Bildsequenzen- bzw. Sensorwert-abhängigen Steuerung auf ihre Performanz bzw. ihr Verhalten überprüft werden können. Dabei wird erfindungsgemäß eine angelernte künstliche Intelligenz herangezogen.

Die künstliche Intelligenz wird unter Verwendung eines Lerndatensatzes, der insbesondere durch Beobachtung bzw. Aufzeichnung realer Situationen und durch menschliche Interaktion erhalte wurde, konditioniert, also angelernt bzw. ist bevorzugt unter Verwendung eines Lerndatensatzes, der insbesondere durch Beobachtung bzw. Aufzeichnung realer Situationen und durch menschliche Interaktion erhalte wurde, konditioniert/angelernt worden, und steht dann bereit, um Testdaten zu erzeugen.

Die mittels der angelernten künstlichen Intelligenz erzeugten Datensätze stellen "synthetisch" erhaltene Testdaten dar, welche in ihrer Art und Geeignetheit insbesondere dem bereitgestellten Lerndatensatz gleichen und realitätsnah bzw. von realen Daten nicht zu unterscheiden sind. Künstliche Intelligenzmethoden werden insbesondere zur Erzeugung von Bildersequenzen und den dazu passenden Aktionen bevorzugt durch generative adversariale Netze genutzt.

Es werden insbesondere hochdimensionale Daten, etwa in Form von Bildsequenzen und niedrigdimensionale Daten in Form von Handlungsbereichen bzw. Handlungskorridoren (engl.: action corridors), die insbesondere zulässige Steuerparameter repräsentieren, verarbeitet, um einen Test-Fall-Generator zu trainieren, um die Performanz bzw. das Verhalten eines insbesondere bild- bzw. sensorwertabhängig steuernden Algorithmus zu klassifizieren. Die Konditionierung basiert bevorzugt auf Bild- und/oder Sensordaten, die um Handlungsbereiche als vektorielle Zahlenreihe ergänzt sind.

Bei dem Algorithmus, für den der Testdatensatz bestimmt ist, und der als Input Bilddaten erhält und als Output von den Bilddaten abhängige Handlungsbereiche ausgibt, handelt es sich um einen Algorithmus zur Steuerung eines Fahrzeuges oder Roboters.

Die Handlungsbereiche umfassen zweckmäßiger Weise jeweils wenigstens eine zulässige Handlung, bevorzugt jeweils mehrere zulässige Handlungen oder sind dadurch gegeben. Es handelt sich bei diesen insbesondere jeweils um einen (Soll-)Bereich mit Handlungen, beispielsweise Steuervorgängen, die für die bzw. im Lichte der zugehörigen Bild- bzw. Sensordaten zulässig sind.

Die Handlungsbereiche repräsentieren zulässige Steuerparameter. Sie repräsentieren bzw. umfassen besonders bevorzugt zulässige Steuerparameter für ein System zur automatisierten, bildgestützten Steuerung einer Einrichtung bzw. werden durch solche gebildet.

Ein Handlungsbereich umfasst beispielsweise wenigstens einen Steuerparameter.

Bei dem wenigstens einen Steuerparameter kann es sich um einen solchen handeln, der eine im Lichte von Bild- bzw. Sensordaten, zu denen er gehört, zulässige (Steuer-)Handlung darstellt.

In der Regel ist für eine gegebene Ausgangssituation, die durch Bild- und/oder Sensordaten erfasst werden kann bzw. ist, nicht nur ein Steuerparameter möglich/zulässig, sondern es gibt einen zugehörigen Sollbereich, welcher eine Mehrzahl von Handlungen bzw. diese repräsentierenden Steuerparametern einschließt. Ein Handlungsbereich kann entsprechend durch eine Mehrzahl von Steuerparametern definiert bzw. gebildet sein, die in einem Sollbereich liegen bzw. einen solchen aufspannen.

Die Handlungsbereiche repräsentieren Steuerparameter, die in Abhängigkeit der Bild- bzw. Sensordaten, zu welchen diese jeweils gehören, zulässig sind. Ein Handlungsbereich kann durch eine Mehrzahl/eine Sammlung von Steuerparametern definiert sein, die, wenn sie ausgeführt werden, dazu führen, dass man sich, insbesondere mit einer Einrichtung, etwa einem Fahrzeug oder Roboter, die über den Algorithmus gesteuert wird, in dem (bzw. einem zulässigen) Handlungsbereich bewegt.

Durch Ergänzen der Bild- und/oder Sensordaten um die Handlungsbereiche wird ein annotierten Datensatz mit den Testinformationen, die zur Erzeugung von weiteren Testszenarios nötig sind, erhalten. Es erfolgt eine Konditionierung des generativen adversarialen Netzes.

Das der Erfindung zugrundeliegende Schema der Testdatengenerierung basiert dabei bevorzugt auf der Arbeit von Ian Goodfellow et al., die in dem Aufsatz "Generative Adversarial Nets" (GANs) , ArXiv: 1406.2661 [statML]661v1, 10. Januar 2014 veröffentlicht wurde, sowie der Arbeit von Alec Redfort et al. aus dem Aufsatz "Unsupervised Representation Learning With Deep Convolutional Generative Adversarial Networks", ArXiv: 1511.06434V2 [cs.LG], 7. Januar 2016, und insbesondere von Sepp Hochreiter und Jürgen Schmidhuber aus dem Aufsatz "Long Short Term Memory" (LSTM) Neural Computation 9 (8): 1735 - 1780, 1997.

Die angelernte künstliche Intelligenz wird angeregt. Die Anregung kann erfolgen, indem der künstlichen Intelligenz ein Input, etwa wenigstens eine Inputdatei zugeführt wird. In Reaktion auf die Anregung, insbesondere das Zuführen eines Inputs, generiert die künstliche Intelligenz einen Output.

Die Anregung der angelernten künstlichen Intelligenz kann prinzipiell auf verschiedene Arten erfolgen, beispielsweise unter Verwendung wenigstens eines Zufallssignals als Input. Ein Zufallssignal kann beispielsweise durch ein Bild bzw. eine Bilddatei gegeben sein, das/die nur Rauschen zeigt bzw. enthält.

Die Anregung kann auch unter Verwendung wenigstens eines Anregungsbildes, bevorzugt unter Verwendung von zwei oder mehr Anregungsbildern bzw. Anregungsbildsequenzen und/oder unter Verwendung wenigstens eines Anregungsvideos erfolgen, die bevorzugt konkrete Inhalte bzw. Szenen bzw. Situationen zeigen, beispielsweise Fahrsituationen bzw. Fahrszenen.

Die Verwendung von Anregungsbildern (bzw. Sequenzen solcher) und/oder Anregungsvideos, die insbesondere reale Inhalte zeigen, bietet gegenüber der Verwendung von Zufallssignalen in der Regel höhere Steuerungsmöglichkeiten.

Ein GAN-Ansatz wird genutzt, um Datensätze aus einer künstlichen Intelligenzanwendung auf Anregung durch ein Zufallssignal (engl.: random signal) oder Verwendung der quasi Linearitäts-Eigenschaft für visuelle Konzepte, wie sie in der vorgenannten Publikation "Unsupervised Representation Learning With Deep Convolutional Generative Adversarial Networks" von Alec Redford et al. aus dem Jahre 2016, insbesondere der FIG 7 auf Seite 10 dieser Publikation, hervorgeht, zu generieren. Das generative Netz bzw. der generative Algorithmus wird dabei invers zu dem üblichen Ansatz genutzt, das bedeutet, statt dem generativen Netz bzw. Algorithmus zu erlauben, dass es Muster erkennt und diese klassifiziert, ist der Prozess herumgedreht und durch "Klassifizierungs-Input", etwa eines Zufallssignals, wird das System angeregt und ein neues "Muster" (engl. Pattern) wird generiert. Goodfellow und Redford zeigen in ihren Arbeiten aus den Jahren 2014 und 2016, dass die Erzeugung neuer Bilder beinahe eine lineare Operation im Vektorraum wird. Das bedeutet, der Algorithmus kann leichter getuned werden, um neue Sequenzen zu generieren.

Insbesondere für den Fall, dass der künstlichen Intelligenz zur Anregung wenigstens ein Bild und/oder Video (bzw. entsprechende Datei) zur Anregung zugeführt wird, welche(s) (reale) Inhalte bzw. Szenen bzw. Situationen zeigt/zeigen, kann die künstliche Intelligenz synthetische Bilder bzw. Bildsequenzen unter Verwendung einer bzw. durch eine quasi Linearitäts-Eigenschaft für visuelle Konzepte generieren.

Unter Linearität ist dabei insbesondere das Superpositionsprinzip zu verstehen (Bild_A + parameter * Bild_B = Bild_C). Unter "Quasi" ist insbesondere zu verstehen, dass aus existierenden Einzelbildern neue Bilder bzw. Anregungsvideos generiert werden (Funktion_a(Bild_A) + parameter * Funktion_b(Bild_B) = Bild_C, wobei Funktion_a und Funktion_b nichtlineare Funktionen sind).

Rein beispielhaft sei genannt, dass man aus einem Bild, welches eine Straße bei gutem Wetter zeigt und einem Bild, welches Regen zeigt, unter Berücksichtigung der quasi Linearitätseigenschaft visueller Konzepte ein (synthetisches, generiertes) Bild erhält, welches die Straße mit bzw. bei Regen zeigt. Werden der künstlichen Intelligenz als beispielsweise ein Bild mit einer Straße bei gutem Wetter und ein Bild mit Regen Anregungsbilder zugeführt, kann ein synthetisches Bild (mit zugehörigem Handlungsbereich) erhalten werden, welches die Straße bei Regen zeigt. So können aus bestehenden Bildern u.a. neue Szenarien erhalten werden, welche in den bestehenden Bildern ursprünglich nicht gezeigt waren. Es sei betont, dass die Kombination aus Straße und Regen rein beispielhaft zu verstehen ist und der künstlichen Intelligenz selbstverständlich auch andere Szenen bzw. Situationen als Anregungsbilder zugeführt werden können und natürlich auch mehr als zwei Bilder.

Auch sei angemerkt, dass dieses Prinzip der vorstehend genannte Aufsatz "Unsupervised Representation Learning With Deep Convolutional Generative Adversarial Networks" in Figur 7 beispielhaft anhand von Bildern mit Gesichtern zeigt. Anregungsbilder und/oder Anregungsvideos können Bilder bzw. Videos sein, die beispielsweise mit Kameras aufgezeichnet wurden und reale Szenen bzw. Situationen, zum Beispiel reale Fahrszenen bzw. -situationen zeigen. Es ist aber auch nicht ausgeschlossen, dass alternativ oder zusätzlich konstruierte bzw. synthetische Bilder und/oder Videos für die Anregung der künstlichen Intelligenz zum Einsatz kommen.

Das antrainierte generative adversariale Netz kann zur Erzeugung neuer Daten herangezogen werden. Durch Anregung dieses Netzes können neue Bild- und/oder Sensordaten sowie zugehörige Handlungsbereiche mit den angelernten Regeln erzeugt werden.

Insbesondere durch die Eigenschaften eines GANs können Generate durch einfache arithmetische Operationen beeinflusst werden. Zum Beispiel kann auch erhalten werden: Allee - Bäume = einfache Straße oder auch geraden Straße + Kurve = Schikane.

Besonders bevorzugt werden anstelle von klassischen convolutional Netzen LSTM-Netze, insbesondere convolutional LSTM Netze, sowohl für das oder die generierenden Netz(e) als auch für das oder die adversarialen Netz(e) benutzt. Die Vorteile der Verwendung von LSTM Netzen liegen vor allem darin, dass zeitabhängige Sequenzen (von Bild- bzw. Sensordaten und zugehörigen Handlungsbereichen) erhalten werden und durch LSTM Rauscheffekte (nicht physikalische Artefakte) vermieden werden. Unter einem LSTM-Netz ist insbesondere ein Netz zu verstehen, mit dem man vergangene Zustände berücksichtigt. LSTM ist eine Spezialisierung dieser Art von Netzen. So kann die Zeitabhängigkeit mitmodelliert werden, die insbesondere Bildsequenzen und Handlungsbereiche bzw. -korridore brauchen. LSTM-Netze, die im Rahmen der vorliegenden Erfindung zum Einsatz kommen können, sind beispielsweise in dem Aufsatz "Long Short Term Memory" (LSTM) Neural Computation 9 (8): 1735 - 1780, 1997 von Sepp Hochreiter und Jürgen Schmidhuber beschrieben.

Der Ansatz wird erweitert und erlaubt convolutional LSTM Netzen wiederkehrende vorangegangene Zustände zeitnah einzufangen, um die künstliche Intelligenz, die insbesondere ein GAN-System umfasst oder durch ein solches gegeben ist, zu trainieren, d.h. Bilddaten, insbesondere Bildsequenzen, und/oder Sensordaten, und zugehörige Handlungsbereiche zu erhalten. Dies erlaubt es, das dynamische Verhalten von Testszenen zu modellieren.

Die erfindungsgemäße Vorgehensweise bietet diverse Vorteile. Einerseits kann der Umfang der menschlichen Interaktion bzw. menschlicher Eingriffe bei dem Testen komplexer Algorithmen deutlich reduziert werden. Da es problemlos möglich ist, eine auch sehr große Anzahl von Testdaten bereitzustellen, kann die Testabdeckung (engl.: test coverage) komplexer Algorithmen deutlich erhöht werden.

Da besonders umfangreich und tiefgehend getestet werden kann, können besonders zuverlässig arbeitende Algorithmen erhalten werden, was für den Bereich der bildgestützten Steuerung, wie sie u.a. im Rahmen der fortgeschrittenen Fahrassistenz bzw. des autonomen Fahrens erfolgt, einen erheblichen Vorteil darstellt bzw. zwingend erforderlich ist. Die Qualität und Zuverlässigkeit derartiger Systeme kann im Ergebnis deutlich erhöht werden und dies mit sehr überschaubarem Aufwand. Ein weiterer Vorteil besteht darin, dass die Erzeugung von Test-Harnischen und Test-Vektoren erfindungsgemäß in nur einem Vorverarbeitungs-Schritt erfolgt.

In bevorzugter Ausführungsform wird wenigstens ein Testdatensatz für einen Algorithmus erzeug, der als Input eine Bildsequenz erhält und als Output von der Bildsequenz abhängige Handlungsbereiche ausgibt, insbesondere für einen Algorithmus eines Systems zur autonomen Fahrzeugführung oder eines bevorzugt fortgeschrittenen Fahrerassistenzsystems, wobei insbesondere in Schritt 2.1 ein Lerndatensatz bereitgestellt wird, welcher eine reale Bildsequenz, die mittels wenigstens einer Bilderfassungseinrichtung aufgezeichnet wurde, und zu den Bildern der Sequenz gehörige Handlungsbereiche, die insbesondere zulässige Steuerparameter für ein System zur automatisierten, bildgestützten Steuerung einer Einrichtung repräsentieren, bereitgestellt wird, und in Schritt 1.3 die angeregte künstliche Intelligenz, insbesondere wenigstens ein generatives Netz dieser, wenigstens einen Testdatensatz erzeugt, der eine neue Bildsequenz und zu der neuen Bildsequenz gehörigen Handlungsbereiche umfasst.

Es sei angemerkt, dass sich die erfindungsgemäße Vorgehensweise insbesondere für den Bereich der fortgeschrittenen Fahrassistenz sowie des autonomen Fahrens eignet, da es in diesen Bereichen erforderlich ist, dass in Abhängigkeit von Bildsequenzen, etwa Videos Steuerbefehle ausgegebene werden, sich diese jedoch keineswegs auf diese beiden Beispiele beschränkt. Vielmehr können Testdatensätze auch für Algorithmen aus anderen Bereichen erzeugt werden, etwa für solche, die im Rahmen einer bildgestützten, automatisierten Robotersteuerung oder automatisierten Sortierprozessen, beispielsweise an einem Fließband, verwendet werden. Auch Algorithmen für eine nicht bildgestützte, sondern auf Sensordaten beruhende Steuerung können erfindungsgemäß getestet werden.

Bevorzugt werden originale, reale Bilddaten, insbesondere Bildsequenzen, und/oder Sensordaten und zugehörige Handlungsbereiche als Lerndatensatz verwendet, um eine künstliche Intelligenz, insbesondere ein GAN-System, zu konditionieren. Dementsprechend ist bevorzugt zunächst wenigstens ein Bilddatensatz, insbesondere eine Bildsequenz, und/oder wenigstens ein Sensordatensatz zu erfassen, was mittels hinlänglich bekannter Bilderfassungseinrichtungen, etwa einer oder mehreren Kamera(s), bzw. Sensoreinrichtungen erfolgen kann. Es kann beispielsweise eine Kamera herangezogen werden, die in einem Fahrzeug oder an einem Roboter vorgesehen ist und aufzeichnet, während das Fahrzeug fährt bzw. der Roboter arbeitet. Die erhaltene Bildsequenz bzw. das erhaltene Video stellt dann insbesondere einen Testvektor dar. Die zu den realen Bild- bzw. Sensordaten gehörigen Handlungsbereiche werden ermittelt und die Bild- bzw. Sensordaten und Handlungsbereiche werden einander zugeordnet und der Testdatensatz wird erhalten. Alternativ dazu, dass ein realer Testdatensatz zunächst auf diese Weise erstellt wird, kann auch auf einen vorhandenen Testdatensatz zugegriffen werden, soweit ein geeigneter verfügbar ist.

In einem nächsten Schritt wird die künstliche Intelligenz, insbesondere ein generatives Netz dieser, bevorzugt mit den realen Testdaten trainiert und kann anschließend beispielsweise mit einem oder mehrere Zufallssignalen angeregt werden, um neue Bilddaten, insbesondere Bildsequenzen, und/oder Sensordaten und zugehörige Handlungsbereiche zu generieren.

Diese neu erhaltenen, synthetischen Testdaten können dann einem zu testenden Algorithmus - ggf. zusätzlich zu dem Lerndatensatz - zugeführt werden, um diesen zu überprüfen.

Insbesondere für den Fall, dass wenigstens ein Testdatensatz für einen Algorithmus eines fortgeschrittenen Fahrerassistenzsystems oder für ein System zur autonomen Fahrzeugführung erzeugt wird, ist in weiterer bevorzugter Ausgestaltung vorgesehen, dass ein zum Anlernen der künstlichen Intelligenz bereitgestellter Lerndatensatz eine Bildsequenz umfasst, die Bilder von Fahrsituationen umfasst, und/oder die für jedes Bild als zugehörigen Handlungsbereich eine Fahrtrajektorie und in bevorzugter Ausgestaltung einen zu der jeweiligen Fahrtrajektorie gehörigen Sollkorridor, der einen Sollbereich um die Fahrtrajektorie definiert, umfasst.

In Weiterbildung wird ferner in Schritt 1.3 wenigstens ein Testdatensatz erzeugt, der eine Bildsequenz umfasst, die Bilder von Fahrsituationen umfasst, und/oder die für jedes Bild als zugehörigen Handlungsbereich eine Fahrtrajektorie und insbesondere einen zu der jeweiligen Fahrtrajektorie gehörigen Sollkorridor, der einen Sollbereich um die Fahrtrajektorie definiert, umfasst.

Ein weiterer Gegenstand der vorliegenden Erfindung ist ein Verfahren zum Testen eines Algorithmus nach Anspruch 8. In bevorzugter Ausgestaltung wird in Schritt 9.1 ein Algorithmus eines fortgeschrittenen Fahrerassistenzsystems oder für ein System zur autonomen Fahrzeugführung als zu testender Algorithmus bereitgestellt.

Eine Ausführungsform des erfindungsgemäßen Verfahrens zum Testen eines Algorithmus zeichnet sich dadurch aus, dass im Anschluss an die Durchführung der Schritte 9.1 bis 9.7 die Schritte 1.2 und 1.3 des erfindungsgemäßen Verfahrens zur Erzeugung eines Testdatensatzes erneut durchgeführt werden, um wenigstens einen weiteren Testdatensatz zu erzeugen, der von dem zuvor erzeugten Testdatensatz verschieden ist, und der wenigstens eine weitere Testdatensatz bereitgestellt und die Schritte 9.4 bis 9.7 wiederholt werden, insbesondere, um weitere Aspekte des Algorithmus zu testen.

Diese Vorgehensweise hat sich als besonders vorteilhaft erwiesen. Durch eine Wiederholung oder auch mehrere Wiederholungen der generativen Schritte wird es insbesondere möglich, immer wieder neue und weitere Aspekte eines zu testenden Algorithmus zu überprüfen.

Noch ein weiterer Gegenstand der vorliegenden Erfindung ist ein Verfahren zum Betreiben eines Systems nach Anspruch 10.

Bei dem System kann es sich beispielswiese um ein solches handeln, welches zur autonomen Fahrzeugsteuerung oder für eine insbesondere fortgeschrittene Fahrassistenz in Fahrzeugen, etwa PKWs zum Einsatz kommt.

Wird auf Basis eines Algorithmus, welcher unter Verwendung wenigstens eines auf die erfindungsgemäße Weise erzeugten Testdatensatzes, insbesondere unter Durchführung des erfindungsgemäßen Verfahrens zum Testen eines Algorithmus überprüft und bei Bedarf angepasst wurde, eine Einrichtung, etwa ein Fahrzeug oder ein Roboter, gesteuert, kann die Steuerung besonders zuverlässig erfolgen und die Sicherheit der automatisierten Steuerung deutlich erhöht werden.

Das Verfahren zum Betreiben eines Systems zur automatisierten, insbesondere bild- und/oder sensorabhängigen Steuerung einer Einrichtung zeichnet sich in bevorzugter Ausführungsform dadurch aus, dass das System wenigstens eine Bilderfassungseinrichtung umfasst und mittels der wenigstens einen Bilderfassungseinrichtung des Systems eine Sequenz von Bildern erfasst wird, den Bildern der Sequenz Handlungsbereiche zugeordnet werden, und die Bildsequenz mit den zugeordneten Handlungsbereichen als Lerndatensatz zum Anlernen der künstlichen Intelligenz, insbesondere in Schritt 2.1 bereitgestellt werden. Alternativ oder zusätzlich kann vorgesehen sein, dass das System wenigstens eine Sensoreinrichtung umfasst und mittels der wenigstens einen Sensoreinrichtung des Systems Sensordaten erfasst werden, den Sensordaten Handlungsbereiche zugeordnet werden, und die Sensordaten mit den zugeordneten Handlungsbereichen als Lerndatensatz zum Anlernen der künstlichen Intelligenz, insbesondere in Schritt 2.1 bereitgestellt werden. Bei Schritt 2.1 handelt es sich insbesondere um einen ersten Schritt des erfindungsgemäßen Verfahrens zur Erzeugung eines Testdatensatzes, welches in Schritt 9.2 des erfindungsgemäßen Verfahrens zum Testen eines Algorithmus durchgeführt wird, um einen Testdatensatz zu erhalten.

Noch ein weiterer Gegenstand der vorliegenden Erfindung ist eine Vorrichtung nach Anspruch 12.

Die erfindungsgemäße Vorrichtung umfasst bevorzugt wenigstens einen Prozessor und insbesondere einen Datenspeicher. Sie kann beispielsweise einen Computer, insbesondere PC umfassen oder als solcher ausgebildet sein.

Eine erfindungsgemäße Vorrichtung kann beispielsweise auch Teil eines Steuerungssystems für eine Einrichtung, insbesondere ein Fahrzeug oder einen Roboter, bilden.

Ebenfalls Gegenstand der Erfindung ist ein Computerprogrammprodukt nach Anspruch 13.

Schließlich ist ein Gegenstand der vorliegenden Erfindung ein computerlesbares Medium nach Anspruch 14.

Ein computerlesbares Medium kann beispielsweise in Form eines Datenträgers, etwa einer CD-ROM, einer DVD oder eines Flash bzw. USB Speichers vorliegen. Es sei angemerkt, dass unter einem computerlesbaren Medium nicht nur ein körperliches Medium zu verstehen sein soll, sondern ein solches beispielswiese auch in Form eines Datenstromes und/oder eines Signals, welches einen Datenstrom repräsentiert, vorliegen kann. Weitere Merkmale und Vorteile des erfindungsgemäßen Verfahrens werden anhand der nachfolgenden beispielhaften Beschreibung unter Bezugnahme auf die beiliegende Zeichnung deutlich.

Darin ist
- FIG 1: eine rein schematische Darstellung zum Ablauf eines Ausführungsbeispiels des erfindungsgemäßen Verfahrens zum Testen eines Algorithmus,
- FIG 2: ein Blockbild zur rein schematischen Veranschaulichung der Konditionierung der künstlichen Intelligenz,
- FIG 3: eine rein schematische Darstellung eines Lerndatensatzes mit einer Bildsequenz und zugehörigen Handlungsbereichen in Form von zugehörigen Fahrtrajektorien und Korridoren,
- FIG 4: ein Blockbild zur rein schematischen Veranschaulichung der Erzeugung eines Testdatensatzes und des Testen eines Algorithmus, und
- FIG 5: eine rein schematische Darstellung dreier Testdatensatzes mit jeweils einer Bildsequenz und zugehörigen Handlungsbereichen in Form von zugehörigen Fahrtrajektorien und Korridoren.

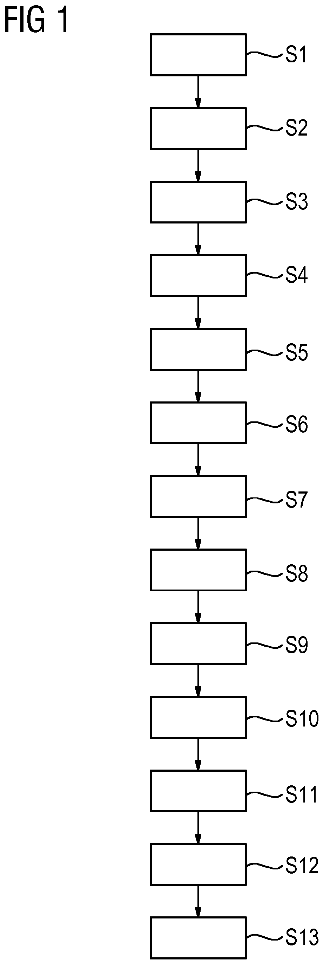

Die FIG 1 zeigt eine rein schematische Darstellung zum Ablauf eines Ausführungsbeispiels des erfindungsgemäßen Verfahrens zum Testen eines Algorithmus 1. In der FIG sind die im Rahmen des Ausführungsbeispiels durchgeführten Schritte dabei in der Art eines Blockbildes bzw. Plusdiagramms dargestellt.

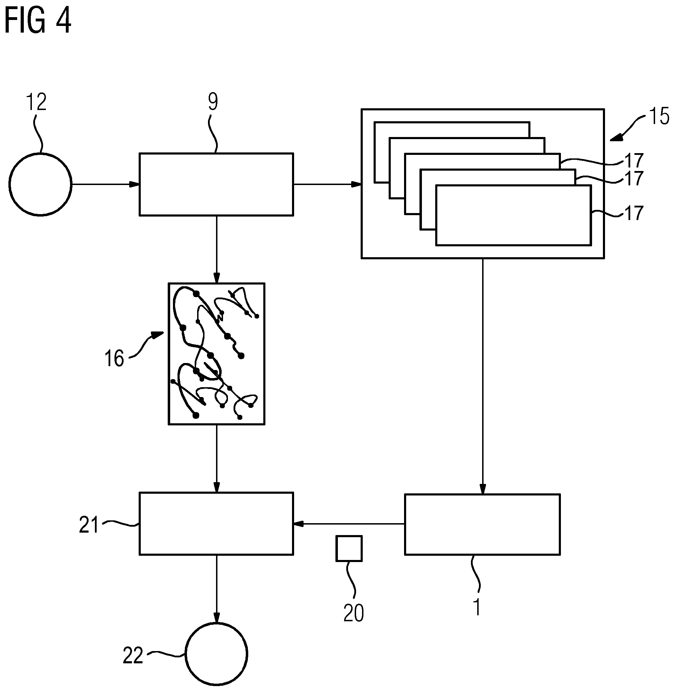

Im Rahmen des dargestellten Ausführungsbeispiels wird in einem ersten Schritt S1 ein zu testender Algorithmus 1, bei dem es sich vorliegend um einen Steueralgorithmus 1 für die autonome Fahrzeugführung handelt, bereitgestellt. Der Algorithmus 1 für die autonome Fahrzeugführung, welcher nur in FIG 4 und darin rein schematisch durch ein Blockelement dargestellt ist, ist derart ausgestaltet, dass er in an sich bekannter Weise als Input eine Bildsequenz, konkret ein Video der Fahrzeugumgebung erhält und als Output von der Bildersequenz abhängige Handlungsbereiche ausgibt, die in Abhängigkeit des jeweiligen Bildes der Sequenz zulässige Steuerparameter für das Fahrzeug repräsentieren.

Im Anschluss an die Bereitstellung des Algorithmus 1 in Schritt S1 wird ein Ausführungsbeispiel eines erfindungsgemäßen Verfahrens zur Erzeugung eines Testdatensatzes durchgeführt.

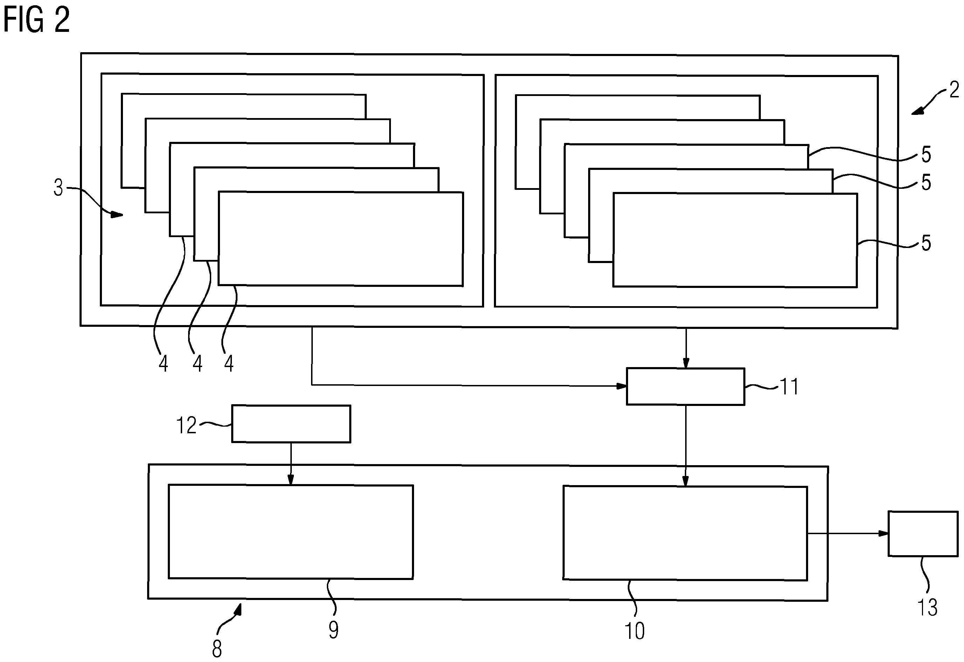

Dabei wird konkret in Schritt S2 ein Lerndatensatz 2 bereitgestellt, welcher reale Bilddaten in Form einer realen Bildsequenz 3 mit einer Mehrzahl von Bildern 4 umfasst, die im zeitlichen Zusammenhang stehen und vorliegend mehrere Aufnahmen einer Fahrsituation zeigen. Die reale Bildsequenz 3 wurde mittels einer in FIG 2 nicht gezeigten Bilderfassungseinrichtung, konkret einer in einem ebenfalls nicht gezeigten Fahrzeug vorgesehenen Kamera aufgezeichnet, während das Fahrzeug eine Fahrt absolvierte.

Der Lerndatensatz 2 umfasst neben der Bildsequenz 3 zu dieser gehörige Handlungsbereiche 5, die bei dem vorliegenden Ausführungsbeispiel durch zu den jeweiligen Bildern 4 der Bildsequenz 3 korrespondierende Fahrtrajektorien 6 sowie zugehörige Sollkorridore 7 für die Fahrtrajektorien 6 gegeben sind.

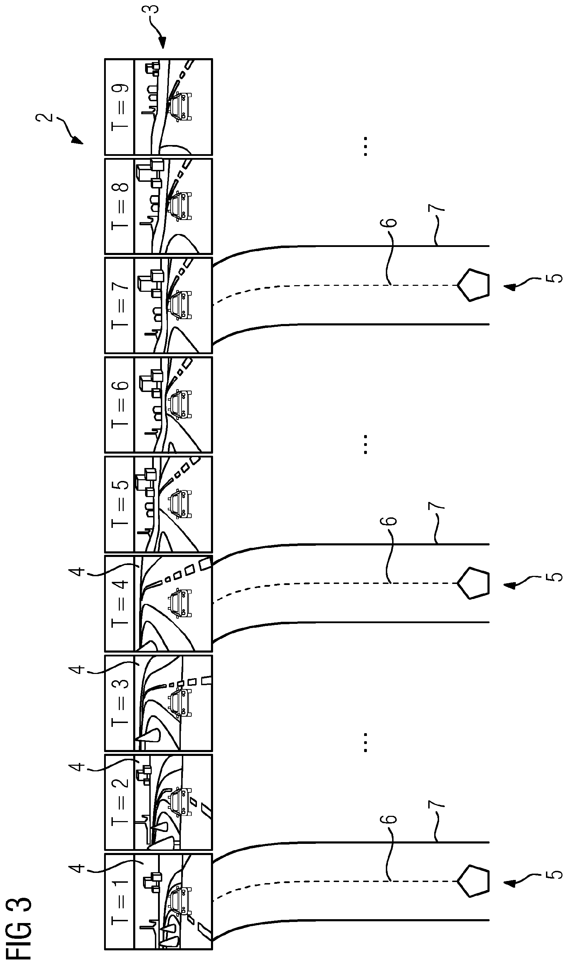

In der FIG 2 ist der Lerndatensatz 2 rein schematisch mit Blockelementen für die Bilder 4 und Handlungsbereiche 5 dargestellt und die FIG 3 enthält eine ebenfalls schematische Darstellung des Lerndatensatzes 2, in der beispielhaft neun Bilder 4 sowie drei jeweils zugehörige Fahrtrajektorien 6 und Sollkorridore 7, welche die zugehörigen Handlungsbereiche 5 bilden, gezeigt sind. Es sei angemerkt, dass die Sollkorridore 7 Sollbereiche für die Fahrtrajektorien 6 definieren. Die neun Bilder 4 repräsentieren neun aufeinanderfolgende Zeitpunkte, was in der FIG 3 mit der Angabe T=1 ... 9 über dem jeweiligen Bild 4 angedeutet ist.

In einem Schritt S3 wird eine künstliche Intelligenz 8 bereitgestellt, die bei dem dargestellten Ausführungsbeispiel durch lange Kurzzeitgedächtnis generative adversariale Netze (LSTM-GANs) gegeben ist. Die LSTM-GANs 8 liegen bei dem dargestellten Ausführungsbeispiel in Form eines langen Kurzzeitgedächtnis generativen Netzes 9 sowie eines langen Kurzzeitgedächtnis diskriminierenden Netzes 10 vor, was in der FIG 2 wiederum rein schematisch durch Blockelemente skizziert ist. Die Architektur der beiden Netze 9, 10 ist wie in dem Aufsatz "Generative Adversarial Nets" (GANs), ArXiv: 1406.2661 [statML]661v1, 10. Januar 2014 von Goodfellow et al. beschrieben. In Abweichung zu dazu sind die Netze 9, 10 vorliegend nicht als klassische "convolutional"-Netze ausgestaltet, wie gemäß diesem Aufsatz, sondern als "convolutional" LSTM-Netze 9, 10, also langes Kurzzeitgedächtnis"convolutional" Netze 9, 10, wie sie in dem Aufsatz "Long Short Term Memory" (LSTM) von Sepp Hochreiter und Jürgen Schmidhuber, Neural Computation 9 (8): 1735 - 1780, 1997 beschrieben sind.

In einem Schritt S4 wird die künstliche Intelligenz 8 unter Verwendung des bereitgestellten Lerndatensatzes 2 konditioniert. Dabei werden bei dem hier beschriebenen Beispiel, wie in der FIG 2 rein schematisch durch Pfeile angedeutet, die Bildsequenz 3 und Handlungsbereiche 5 zusammengefügt, was symbolisch über ein Blockelement mit dem Bezugszeichen 11 skizziert ist, und an das LSTM diskriminierende Netz 10 übergeben. Das LSTM generierende Netz 9 wird über einen Anregungs-Input 12 angeregt und seine Ausgaben also Generate werden ebenfalls an das LSTM diskriminierende System 10 übergeben, welches jeweils eine Entscheidung korrekt/nicht korrekt trifft, was durch das mit dem Bezugszeichen 13 versehene Blockbildelement angedeutet ist. Der Anregungs-Input 12 kann durch ein Zufallssignal gegeben sein. Auch ist es möglich, dass das LSTM generierende Netz 9 bei Null anfängt.

Bei der korrekt/nicht korrekt Entscheidung 13 handelt sich insbesondere um die Entscheidung, ob ein von dem generativen Netz 9 ausgegebenes Generat mit Daten des dem diskriminierenden Netz 10 übergebenen Lerndatensatzes übereinstimmt bzw. von diesen zu unterscheiden ist oder nicht. Die Methoden der Netze 9, 10 werden insbesondere verbessert, bis die vom generativen Netz 9 erzeugten Generate möglichst nicht mehr von den Daten gemäß dem Lerndatensatz 2 zu unterscheiden sind. Im Zusammenhang mit der Anlernung von GANs sei auch auf die Einleitung des Aufsatzes "Generative Adversarial Nets" (GANs) von Ian Goodfellow et al., ArXiv: 1406.2661 [statML]661v1, vom 10. Januar 2014, verwiesen.

Im Anschluss an die Konditionierung wird in einem Schritt S5 das generative Netz 9 der konditionierten künstlichen Intelligenz 8 in dem dargestellten Ausführungsbeispiel wiederum mittels eines Zufallssignals (engl.: random signal) 12 angeregt. Dies ist in der FIG 4 schematisch angedeutet. Ein Zufallssignal 12 kann durch wenigstens ein Bild bzw. wenigstens eine Bilddatei gegeben sein, die verrauscht ist bzw. nur Rauschen zeigt, wobei dies rein beispielhaft zu verstehen ist.

Durch ein Zufallssignal 12 werden neue Szenarien erzeugt als Antwort einer Instanz. Dafür sind je nach antrainiertem Aufbau verschiedene Dimensionen möglich. Dies kann wie Rauschen im Fernsehen betrachtet werden.

Alternativ oder zusätzlich zu einem Zufallssignal 12 kann auch wenigstens ein Anregungsbild, können bevorzugt zwei oder mehr Anregungsbilder bzw. Sequenzen mit solchen bzw. wenigstens ein Anregungsvideo insbesondere mit realem Inhalt (beispielsweise Fahrsituationen zeigend) als Anregungs-Input 12 dienen.

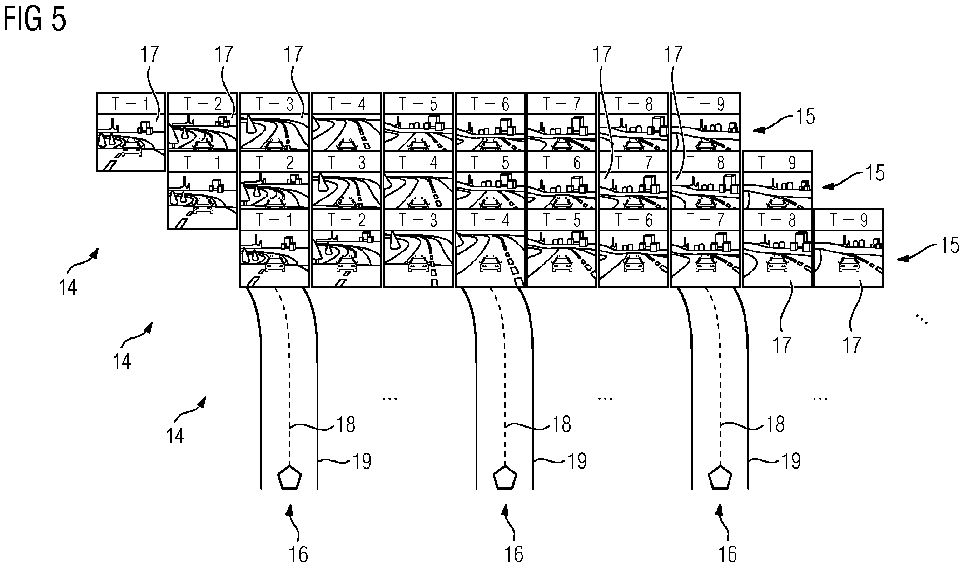

Das angeregte LSTM generative Netz 9 erzeugt wenigstens einen Testdatensatz 14, der eine neue Bildsequenz 15 sowie zu der neuen Bildsequenz 15 gehörige Handlungsbereiche 16 umfasst (Schritt S6). Der unter Verwendung des konditionierten LSTM generativen Netzes 9 erhaltene wenigstens eine Testdatensatz 14 umfasst bei dem beschriebenen Ausführungsbeispiel in Analogie zu dem Lerndatensatz 2 eine Bildsequenz 15 jedoch mit einer Mehrzahl von synthetisch generierten Bildern 17, und die für jedes Bild 17 der Sequenz 15 vorhandenen Handlungsbereiche 16 umfassen ebenfalls in Analogie zu dem Lerndatensatz 2 jeweils eine zugehörige Fahrtrajektorie 18 sowie einen zugehörigen Sollkorridor 19. In der FIG 5 ist dies erneut rein schematisch und beispielshaft für insgesamt drei generierte Testdatensätze 14 veranschaulicht.

Vor allem für den Fall, dass der künstlichen Intelligenz eines bzw. mehrere Anregungsbilder und/oder eines oder mehrere Anregungsvideos mit realem Inhalt (etwa Fahrsituationen) als Input-Signal(e) für die Anregung zugeführt wird/werden, können synthetische Bilder durch eine bzw. unter Berücksichtigung bzw. Verwendung einer quasi Linearitätseigenschaft für visuelle Konzepte generiert bzw. erhalten werden. Im Zusammenhang mit der quasi Linearitätseigenschaft für visuelle Konzepte sei auch auf den Aufsatz "Unsupervised Representation Learning With Deep Convolutional Generative Adversarial Networks" von Alec Redford et al. aus dem Jahre 2016, darin insbesondere auf die FIG 7 auf Seite 10 verwiesen.

In einem Schritt S7 wird wenigstens ein auf die vorbeschriebene Weise erhaltener Testdatensatz 14 bereitgestellt und in einem Schritt S8 wird die Bildsequenz 15 dem zu testenden Algorithmus 1 als Input zugeführt, was in der FIG 4 rein schematisch durch einen entsprechenden von der Bildsequenz 15 zu dem schematisch als Blockelement dargestellten Algorithmus 1 führenden Pfeil angedeutet ist.

In einem Schritt S9 wird der Algorithmus 1 ausgeführt und gibt als Output Handlungsbereiche 20 aus.

In einem Schritt S10 werden die von dem Algorithmus 1 als Output ausgegebenen Handlungsbereiche 20 mit den Handlungsbereichen 16 des mittels des generativen Netzes 9 erzeugten Testdatensatzes 14 verglichen. Der Vergleich ist in der FIG durch ein mit der Bezugsziffer 21 versehenes Blockelement schematisch angedeutet.

In einem Schritt S 11 wird aus dem Ergebnis des Vergleichs auf eine Qualität bzw. Funktionalität des getesteten Algorithmus 1 geschlossen.

Für den Fall, dass auf Basis des Ergebnisses des Vergleichs auf eine ausreichende Qualität bzw. Funktionalität des zu testenden Algorithmus 1 geschlossen werden kann, können die Handlungsbereiche 20 als korrekte Handlungsbereiche 22 ausgegeben werden, was in der FIG 4 erneut rein schematisch durch ein Blockbildelement angedeutet ist (Schritt S12).

Auf Basis der korrekten Handlungsbereiche 22 kann dann ein Fahrzeug besonders zuverlässig gesteuert werden (Schritt S13) .

Sind mehrere Testdatensätze 14 erzeugt worden, können die Bildsequenzen 15 von allen Testdatensätzen 14 dem zu testenden Algorithmus 1 zugeführt werden, und die von diesem in Reaktion darauf ausgegebenen Handlungsbereiche 20 können mit den zu der jeweiligen Bildsequenz 15 gehörigen Handlungsbereichen 16, also Fahrtrajektorien 18 und zugehörigen Sollkorridoren 19, des jeweiligen Testdatensatzes 14 verglichen und ein Rückschluss auf die Qualität bzw. Funktionalität des Algorithmus 1 gezogen werden. Wird eine Mehrzahl von Testdatensätzen 14 erzeugt und verwendet, kann der Algorithmus 1 besonders umfassend geprüft werden.

## Patentansprüche

1. Computerimplementiertes Verfahren zur Erzeugung wenigstens eines Testdatensatzes (14) für einen Algorithmus (1), der als Input Bilddaten (17) erhält und als Output von den Bilddaten abhängige Handlungsbereiche (16) ausgibt, und/oder der als Input Sensordaten erhält und als Output von den Sensordaten abhängige Handlungsbereiche ausgibt,
wobei der Algorithmus zur Steuerung eines Fahrzeuges oder Roboters dient, und
wobei die Handlungsbereiche zulässige Steuerparameter repräsentieren, und
wobei, wenn die Steuerungsparameter ausgeführt werden, das Fahrzeug oder der Roboter dadurch veranlasst wird, sich in dem Handlungsbereich zu bewegen,
umfassend folgende Schritte:
1.1 Eine angelernte künstliche Intelligenz (8) wird bereitgestellt, welche künstliche Intelligenz wenigstens ein generatives adversariales Netz umfasst,
1.2 die künstliche Intelligenz (8) wird unter Verwendung eines Zufallssignals und/oder unter Verwendung einer quasi Linearitätseigenschaft für visuelle Konzepte angeregt, und
1.3 die angeregte künstliche Intelligenz (8) erzeugt wenigstens einen Testdatensatz (14), der Bilddaten (15) und zu den Bilddaten (15) gehörige Handlungsbereiche (16) und/oder Sensordaten und zu den Sensordaten gehörige Handlungsbereiche umfasst,
wobei zum Erhalt der in Schritt 1.1 bereitgestellten angelernten künstlichen Intelligenz folgende Schritte durchgeführt werden:
2.1 Ein Lerndatensatz (2), welcher reale, mittels wenigstens einer Bilderfassungseinrichtung aufgezeichnete Bilddaten (3), und zu den realen Bilddaten (3) gehörige Handlungsbereiche (5) und/oder reale, mittels wenigstens einer Sensoreinrichtung aufgezeichnete Sensordaten, und zu den realen Sensordaten gehörige Handlungsbereiche umfasst, wird bereitgestellt,
2.2 die künstliche Intelligenz wird bereitgestellt, und
2.3 die künstliche Intelligenz (8) wird unter Verwendung des bereitgestellten Lerndatensatzes (2) konditioniert.

2. Verfahren nach Anspruch 1, **dadurch gekennzeichnet, dass** in Schritt 2.1 ein Lerndatensatz (2), welcher eine reale Bildsequenz (3), die mittels wenigstens einer Bilderfassungseinrichtung aufgezeichnet wurde, und zu den Bildern (4) der Sequenz (3) gehörige Handlungsbereiche (5) bereitgestellt wird, und in Schritt 1.3 die angeregte künstliche Intelligenz (8) wenigstens einen Testdatensatz (14) erzeugt, der eine neue Bildsequenz (15) und zu der neuen Bildsequenz (15) gehörigen Handlungsbereiche (16) umfasst, und/oder dass in Schritt 2.1 ein Lerndatensatz (2) mit einer realen Bildsequenz (3) bereitgestellt wird, und die Handlungsbereiche (5) des Lerndatensatzes (2) für jedes Bild (4) der Bildsequenz (3) wenigstens einen Steuerparameter oder diesen repräsentierende Werte und für jeden wenigstens einen Steuerparameter oder diesen repräsentierenden Wert einen zugehörigen Sollbereich umfassen.

3. Verfahren nach Anspruch 1 oder 2, **dadurch gekennzeichnet, dass** wenigstens ein Testdatensatz (15) für einen Algorithmus (1) eines fortgeschrittenen Fahrerassistenzsystems oder für ein System zur autonomen Fahrzeugführung erzeugt wird, und der bereitgestellte Lerndatensatz (2) eine Bildsequenz (3) umfasst, die Bilder von Fahrsituationen umfasst, und/oder die für jedes Bild (4) als zugehörigen Handlungsbereich (5) eine Fahrtrajektorie (6) umfasst.

4. Verfahren nach einem der vorhergehenden Ansprüche, **dadurch gekennzeichnet, dass** wenigstens ein Testdatensatz (14) für einen Algorithmus (1), der als Input eine Bildsequenz (17) erhält und als Output von der Bildsequenz (17) abhängige Handlungsbereiche (16) ausgibt erzeugt wird.

5. Verfahren nach einem der vorhergehenden Ansprüche, **dadurch gekennzeichnet, dass** in Schritt 1.3 wenigstens ein Testdatensatz (12) erzeugt wird, der eine Bildsequenz (15) umfasst, die Bilder (17) von Fahrsituationen umfasst, und/oder die für jedes Bild (17) als zugehörigen Handlungsbereich (16) eine Fahrtrajektorie (18) umfasst.

6. Verfahren nach einem der vorhergehenden Ansprüche, **dadurch gekennzeichnet, dass** in Schritt 1.1 eine künstliche Intelligenz (8) bereitgestellt wird, die lange Kurzzeitgedächtnis Netze (9, 10) umfasst oder durch solche gegeben ist.

7. Verfahren nach einem der vorhergehenden Ansprüche, **dadurch gekennzeichnet, dass** die künstliche Intelligenz (8) wenigstens ein diskriminierendes Netz (10) umfasst.

8. Verfahren zum Testen eines Algorithmus (1), umfassend die Schritte:
9.1 Ein zu testender Algorithmus (1), der als Input Bilddaten (15) erhält und als Output von den Bilddaten (15) abhängige Handlungsbereiche (20) ausgibt oder der als Input Sensordaten erhält und als Output von den Sensordaten abhängige Handlungsbereiche ausgibt wird bereitgestellt,
9.2 das Verfahren nach einem der vorherigen Ansprüche wird durchgeführt, um wenigstens einen Testdatensatz (14) mit Bilddaten (15) und zu den Bilddaten (15) gehörigen Handlungsbereichen (16) und/oder mit Sensordaten und zu den Sensordaten gehörigen Handlungsbereichen zu erhalten,
9.3 der wenigstens eine Testdatensatz (14) wird bereitgestellt,
9.4 die Bilddaten (15) und/oder die Sensordaten des wenigstens einen Testdatensatzes (14) werden dem zu testenden Algorithmus (1) als Input zugeführt,
9.5 der Algorithmus (1) wird ausgeführt und gibt als Output Handlungsbereiche (20) aus,
9.6 die von dem Algorithmus als Output ausgegebenen Handlungsbereiche (20) werden mit den Handlungsbereichen (16) des wenigstens einen Testdatensatzes (14) verglichen,
9.7 aus dem Ergebnis des Vergleichs (21) wird auf eine Qualität des getesteten Algorithmus (1) geschlossen.

9. Verfahren nach Anspruch 8, **dadurch gekennzeichnet, dass** im Anschluss an die Durchführung der Schritte 9.1 bis 9.7 die Schritte 1.2 und 1.3 des Verfahrens zur Erzeugung wenigstens eines Testdatensatzes (14) nach einem der Ansprüche 1 bis 8 erneut durchgeführt werden, um wenigstens einen weiteren Testdatensatz (14) zu erzeugen, der von dem zuvor erzeugten Testdatensatz (14) verschieden ist, und der wenigstens eine weitere Testdatensatz (14) bereitgestellt und die Schritte 9.4 bis 9.7 wiederholt werden.

10. Verfahren zum Betreiben eines Systems zur automatisierten Steuerung einer Einrichtung, wobei das System wenigstens eine Bilderfassungseinrichtung und/oder wenigstens eine Sensoreinrichtung, sowie eine Auswerte- und Steuereinheit und Mittel zur Steuerung der Einrichtung umfasst, wobei in der Steuer- und Auswerteeinheit ein Algorithmus (1) abgelegt ist, der als Input Bilddaten (17) erhält und als Output von den Bilddaten abhängige Handlungsbereiche (16) oder der als Input Sensordaten erhält und als Output von den Sensordaten abhängige Handlungsbereiche ausgibt, bei dem der Algorithmus (1) unter Durchführung des Verfahrens nach einem der Ansprüche 8 oder 9 getestet wird und für den Fall, dass der Test eine unzureichende Funktionsweise des Algorithmus (1) ergibt, der Algorithmus (1) in vorgegebener Weise angepasst wird, und unter Nutzung des Algorithmus (1) eine Steuerung der Einrichtung erfolgt.

11. Verfahren nach Anspruch 10, **dadurch gekennzeichnet, dass** das System wenigstens eine Bilderfassungseinrichtung umfasst und mittels der wenigstens einen Bilderfassungseinrichtung des Systems eine Sequenz (3) von Bildern (4) erfasst wird, den Bildern (4) der Sequenz (3) Handlungsbereiche (5) zugeordnet werden, und die Bildsequenz (3) mit den zugeordneten Handlungsbereichen (5) als Lerndatensatz (2) zum Anlernen der künstlichen Intelligenz (8) bereitgestellt werden, und/oder das System wenigstens eine Sensoreinrichtung umfasst und mittels der wenigstens einen Sensoreinrichtung des Systems Sensordaten erfasst wird, den Sensordaten Handlungsbereiche zugeordnet werden, und die Sensordaten mit den zugeordneten Handlungsbereichen als Lerndatensatz zum Anlernen der künstlichen Intelligenz (8) bereitgestellt werden.

12. Vorrichtung, die zur Durchführung des Verfahrens nach einem der Ansprüche 1 bis 7 ausgebildet und eingerichtet ist.

13. Computerprogrammprodukt umfassend Instruktionen, die, wenn sie auf wenigstens einem Computer ausgeführt werden, den wenigstens einen Computer zur Durchführung des Verfahrens nach einem der Ansprüche 1 bis 7 veranlassen.

14. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 7 durchzuführen.

## Claims

1. Computer-implemented method for generating at least one test data set (14) for an algorithm (1) that obtains image data (17) as an input and outputs areas of action (16) that are dependent upon the image data as an output, and/or said algorithm obtains sensor data as an input and outputs areas of action that are dependent upon the sensor data as an output, wherein the algorithm is used for controlling a vehicle or robot, and
wherein the areas of action represent permissible control parameters, and
wherein, when the control parameters are executed, the vehicle or the robot is triggered to move in the area of action,
said method comprising the following steps:
1.1 a trained artificial intelligence (8) is provided, said artificial intelligence comprising at least one generative adversarial network,
1.2 the artificial intelligence (8) is stimulated using at least one random signal and/or using a quasi-linearity property for visual concepts and
1.3 the stimulated artificial intelligence (8) generates at least one test data set (14) that comprises image data (15) and areas of action (16) that are associated with the image data (15), and/or sensor data and areas of action that are associated with the sensor data,
wherein in order to obtain the trained artificial intelligence that is provided in step 1.1, the following steps are implemented:
2.1 a learning data set (2) is provided that comprises real image data (3) that is recorded by means of at least one image capturing facility, and areas of action (5) that are associated with the real image data (3), and/or real sensor data that is recorded by means of at least one sensor facility, and areas of action that are associated with the real sensor data,
2.2 an artificial intelligence is provided and
2.3 the artificial intelligence (8) is conditioned using the learning data set (2) that is provided.

2. Method according to claim 1, **characterised in that** in step 2.1 a learning data set (2) is provided that comprises a real image sequence (3), which has been recorded by means of at least one image capturing facility, and areas of action (5) that are associated with the images (4) of the sequence (3), and in step 1.3 the stimulated artificial intelligence (8) generates at least one test data set (14) that comprises a new image sequence (15) and areas of action (16) that are associated with the new image sequence (15), and/or that in step 2.1 a learning data set (2) having a real image sequence (3) is provided, and the areas of action (5) of the learning data set (2) for each image (4) of the image sequence (3) comprise at least one control parameter or values that represent these control parameters and comprises an associated desired region for each at least one control parameter or value that represents this control parameter.

3. Method according to claim 1 or 2, **characterised in that** at least one test data set (15) is generated for an algorithm (1) of an advanced driver assistance system or for a system for autonomous vehicle control, and the learning data set (2) that is provided comprises an image sequence (3) that comprises images of driving situations, and/or that for each image (4) comprises a driving trajectory (6) as an associated area of action (5).

4. Method according to one of the preceding claims, **characterised in that** at least one test data set (14) is generated for an algorithm (1) that obtains an image sequence (17) as an input and outputs areas of action (16) that are dependent upon the image sequence (17) as an output.

5. Method according to one of the preceding claims, **characterised in that** in step 1.3 at least one test data set (12) is generated that comprises an image sequence (15) that comprises images (17) of driving situations, and/or that for each image (17) comprises a driving trajectory (18) as an associated area of action (16).

6. Method according to one of the preceding claims, **characterised in that** in step 1.1 an artificial intelligence (8) is provided that comprises long short-term memory networks (9, 10) or is provided by such networks.

7. Method according to one of the preceding claims, **characterised in that** the artificial intelligence (8) comprises at least one discriminative network (10).

8. Method for testing an algorithm (1), comprising the steps:
9.1 an algorithm (1) that is to be tested is provided and said algorithm obtains image data (15) as an input and outputs areas of action (20) that are dependent upon the image data (15) as an output, and/or said algorithm obtains sensor data as an input and outputs areas of action that are dependent upon the sensor data as an output,
9.2 the method according to one of the preceding claims is implemented in order to obtain at least one test data set (14) having image data (15) and areas of action (16) that are associated with the image data (15) and/or having sensor data and areas of action that are associated with the sensor data,
9.3 the at least one test data set (14) is provided,
9.4 the image data (15) and/or the sensor data of the at least one test data set (14) is supplied as an input to the algorithm (1) that is to be tested,
9.5 the algorithm (1) is executed and outputs areas of action (20) as an output,
9.6 the areas of action (20) that are output by the algorithm as an output are compared with the areas of action (16) of the at least one test data set (14),
9.7 a quality of the tested algorithm (1) is concluded from the result of the comparison (21).

9. Method according to claim 8, **characterised in that** following the implementation of the steps 9.1 to 9.7 the steps 1.2 and 1.3 of the method for generating at least one test data set (14) according to one of claims 1 to 8 are performed again in order to generate at least one further test data set (14) that is different from the previously generated test data set (14) and the at least one further test data set (14) is provided and the steps 9.4 to 9.7 are repeated.

10. Method for operating a system for the automated control of a facility, wherein the system comprises at least one image capturing facility and/or at least one sensor facility, and also an evaluating and control unit and means for controlling the facility, wherein an algorithm (1) is stored in the control and evaluating unit and said algorithm obtains image data (17) as an input and outputs areas of action (16) that are dependent upon the image data as an output or said algorithm obtains sensor data as an input and outputs areas of action that are dependent upon the sensor data as an output, in which the algorithm (1) is tested while implementing the method according to claims 8 or 9 and for the case that the test indicates an insufficient function of the algorithm (1), the algorithm (1) is adapted in a predetermined manner and the facility is controlled using the algorithm (1).

11. Method according to claim 10, **characterised in that** the system comprises at least one image capturing facility and a sequence (3) of images (4) is captured by means of the at least one image capturing facility of the system, areas of action (5) are allocated to the images (4) of the sequence (3), and the image sequence (3) having the allocated areas of action (5) is provided as the learning data set (2) in order to train the artificial intelligence (8), and/or the system comprises at least one sensor facility and sensor data is captured by means of the at least one sensor facility of the system, areas of action are allocated to the sensor data and the sensor data having the allocated areas of action is provided as a learning data set in order to train the artificial intelligence (8).

12. Apparatus that is embodied and configured so as to implement the method according to one of claims 1 to 7.

13. Computer program product comprising instructions which, when they are executed on at least one computer, trigger the at least one computer to implement the method according to one of claims 1 to 7.

14. Computer readable medium that comprises instructions that if they are implemented on at least one computer, the at least one computer is triggered to implement the steps of the method according to one of claims 1 to 7.

## Revendications

1. Procédé mis en œuvre par ordinateur de production d'au moins un ensemble (14) de données de test d'un algorithme (1), qui contient des données (17) d'image comme entrée et qui donne comme sortie des parties (16) de traitement dépendant des données d'image et/ou qui reçoit des données de capteur comme entrée et qui donne comme sortie des parties de traitement dépendant des données de capteur,
dans lequel l'algorithme sert à la commande d'un véhicule ou d'un robot,
dans lequel les parties de traitement représentent des paramètres de commande admissibles, et
dans lequel, lorsque les paramètres de commande sont réalisés, il est provoqué que le véhicule ou le robot se déplace dans la partie de traitement,
comprenant les stades suivants :
1.1. on se procure une intelligence (8) artificielle ayant subi un apprentissage, qui comprend de l'intelligence artificielle d'au moins un réseau génératif antagoniste,
1.2. on excite l'intelligence (8) artificielle en utilisant un signal aléatoire et/ou en utilisant une propriété quasi-linéaire pour des concepts visuels, et
1.3. l'intelligence (8) artificielle excitée produit au moins un ensemble (14) de données de test, qui comprend des données (15) d'image et des parties (16) de traitement appartenant aux données (15) d'image et/ou des données de capteur et des parties de traitement appartenant aux données de capteur,
dans lequel, pour obtenir l'intelligence artificielle et ayant subit un apprentissage que l'on s'est procuré au stade 1.1, on effectue les stades suivants :
2.1. on se procure un ensemble (2) de données d'apprentissage, qui comprend des données (3) d'image réelles, caractérisées au moyen d'un dispositif de prise d'image, et des parties (5) de traitement appartenant aux données (3) d'image réelles et/ou des données de capteur réelles, enregistrées au moyen d'un dispositif capteur, et des parties de traitement appartenant aux données de capteur réelles,
2.2. on se procure l'intelligence artificielle, et
2.3. on conditionne l'intelligence (8) artificielle en utilisant l'ensemble (2) de données d'apprentissage que l'on s'est procuré.

2. Procédé suivant la revendication 1, **caractérisé en ce que**, dans le stade 2.1, on se procure un ensemble (2) de données d'apprentissage, qui comprend une séquence (3) d'images réelles, qui a été enregistrée au moyen d'au moins un dispositif de prise d'image, et des parties (5) de traitement appartenant aux images (4) de la séquence (3) et, dans le stade 1.3, l'intelligence (8) artificielle excitée produit au moins un ensemble (14) de données de test, qui comprend une nouvelle séquence (15) d'images et des parties (16) de traitement appartenant à la nouvelle séquence (15) d'images, et/ou **en ce que**, dans le stade 2.1, on se procure un ensemble (2) de données d'apprentissage ayant une séquence (3) d'images réelles et les parties (5) de traitement de l'ensemble (2) de données d'apprentissage comprennent, pour chaque image (4) de la séquence (3) d'images, au moins un paramètre de commande ou des valeurs représentant celui-ci et, pour au moins chaque paramètre de commande ou une valeur représentant celui-ci, une plage de consigne lui appartenant.

3. Procédé suivant la revendication 1 ou 2, **caractérisé en ce qu'**on produit au moins un ensemble (15) de données de test d'un algorithme (1) d'un système d'assistance à la conduite progressif ou d'un système de conduite autonome de véhicule et l'ensemble (2) de données d'apprentissage que l'on s'est procuré comprend une séquence (3) d'images, qui comprend des images de situations de circulation et/ou qui comprend, pour chaque image (4), comme partie (5) de traitement lui appartenant, une trajectoire (6) de marche.

4. Procédé suivant l'une des revendications précédentes, **caractérisé en ce qu'**on produit au moins un ensemble (14) de données de test d'un algorithme (1), qui reçoit comme entrée une séquence (17) d'images et qui donne comme sortie des parties (16) de traitement dépendant de la séquence (17) d'images.

5. Procédé suivant l'une des revendications précédentes, **caractérisé en ce que**, dans le stade 1.3, on produit au moins un ensemble (12) de données de test, qui comprend une séquence (15) d'images, qui comprend des images (17) de situations de circulation et/ou qui comprend une trajectoire (18) de marche pour chaque image (17) comme partie (16) de traitement lui appartenant.

6. Procédé suivant l'une des revendications précédentes, **caractérisé en ce que**, dans le stade 1.1, on se procure une intelligence (8) artificielle, qui comprend des réseaux (9, 10) longs de mémoire de courte durée ou qui est donnée par ceux-ci.

7. Procédé suivant l'une des revendications précédentes, **caractérisé en ce que** l'intelligence (8) artificielle comprend au moins un réseau (10) discriminant.

8. Procédé de test d'un algorithme (1) comprenant les stades :
9.1 on se procure un algorithme (1) testé, qui reçoit comme entrées des données (15) d'image et qui donne comme sorties des parties (20) de traitement dépendant des données (15) d'image ou qui reçoit comme entrées des données de capteur et qui donne comme sorties des parties de traitement dépendant des données de capteur,
9.2 on effectue le procédé suivant l'une des revendications précédentes pour obtenir au moins un ensemble (14) de données de test ayant des données (15) d'image et des parties (16) de traitement appartenant aux données (15) d'image et/ou ayant des données de capteur et des parties de traitement appartenant aux données de capteur,
9.3 on se procure au moins un ensemble (14) de test,
9.4 on envoie comme entrées les données (15) d'image et/ou les données de capteur du au moins un ensemble (14) de données de test à l'algorithme (1) à tester,
9.5 on exécute l'algorithme (1) et il donne comme sorties des parties (20) de traitement,
9.6 on compare les parties (20) de traitement données comme sorties par l'algorithme aux parties (16) de traitement du au moins un ensemble (14) de données de test,
9.7 on décide, à partir du résultat de la comparaison (21) de la qualité de l'algorithme (1) à tester.

9. Procédé suivant la revendication 8, **caractérisé en ce qu'**à la suite de la mise en œuvre des stades 9.1 à 9.7, on effectue à nouveau les stades 1.2 et 1.3 du procédé de production d'au moins un ensemble (14) de données de test suivant l'une des revendications 1 à 8 pour produire au moins un autre ensemble (14) de données de test, qui est différent de l'ensemble (14) de test produit auparavant, et on dispose du au moins un autre ensemble (14) de données de test et on répète les stades 9.4 à 9.7.

10. Procédé pour faire fonctionner un système de commande automatisé d'un dispositif, dans lequel le système comprend au moins un dispositif de prise d'image et/ou au moins un dispositif capteur, ainsi qu'une unité d'analyse et de commande et des moyens de commande du dispositif, dans lequel il est mis, dans l'unité de commande et d'analyse, un algorithme (1), qui reçoit comme entrées des données (17) d'image et qui donne comme sorties des parties (16) de traitement dépendant des données d'image ou qui reçoit comme entrées des données de capteur et qui donne comme sorties des parties de traitement dépendant des données de capteur, dans lequel on teste l'algorithme (1) en effectuant le procédé suivant l'une des revendications 8 ou 9, et dans le cas où le test donne un mode de fonctionnement insuffisant de l'algorithme (1), on adapte l'algorithme (1) de la façon donnée auparavant et une commande du dispositif a lieu en utilisant l'algorithme (1).

11. Procédé suivant la revendication 10, **caractérisé en ce que** le système comprend au moins un dispositif de prise d'image et on prend une séquence (3) d'images (4) au moyen du au moins un dispositif de prise d'image du système, on associe aux images (4) de la séquence (3) des parties (5) de traitement et on met à disposition la séquence (3) d'images avec les parties (5) de traitement associées sous la forme d'un ensemble (2) de données d'apprentissage pour l'apprentissage de l'intelligence (8) artificielle et/ou le système comprend au moins un dispositif capteur, et on saisit des données de capteur au moyen du au moins un dispositif capteur du système, on associe des parties de traitement aux données de capteur et on met à disposition les données de capteur avec les parties de traitement associées comme ensemble de données d'apprentissage pour l'apprentissage de l'intelligence (8) artificielle.

12. Dispositif, qui est constitué et conçu pour effectuer le procédé suivant l'une des revendications 1 à 7.

13. Produit de programme d'ordinateur comprenant des instructions, qui, lorsqu'elles sont réalisées sur au moins un ordinateur, font que le au moins un ordinateur effectue le procédé suivant l'une des revendications 1 à 7.

14. Support, déchiffrable par ordinateur, qui comprend des instructions, qui, lorsqu'elles sont réalisées sur au moins un ordinateur, font que le au moins un ordinateur effectue les stades du procédé suivant l'une des revendications 1 à 7.
